# EUROPÄISCHE PATENTSCHRIFT

(11) **EP 2 945 977 B1**
(45) Veröffentlichungstag und Bekanntmachung des Hinweises auf die Patenterteilung: **01.04.2020**
(21) Anmeldenummer: 13803003.6
(22) Anmeldetag: 12.12.2013
(51) Int. Cl.: C08G 77/60

(54) **HOCHMOLEKULARES POLYSILAN UND DESSEN HERSTELLUNGSVERFAHREN ZUR PRODUKTION PRÄKERAMISCHER FORMKÖRPER**
HIGH-MOLECULAR POLYSILANE AND METHOD FOR THE PRODUCTION THEREOF FOR PRODUCING PRE-CERMANIC MOLDED BODIES
POLYSILANE DE POIDS MOLECULAIRE ELEVE ET PROCEDE DE PREPARATION CORRESPONDANT POUR LA PRODUCTION DE CORPS MOULES PRECERAMIQUES

(30) Priorität: 14.12.2012 DE 102012223260
(43) Veröffentlichungstag der Anmeldung: 25.11.2015
(73) Patentinhaber: BJS Ceramics GmbH, 86368 Gersthofen (DE)
(72) Erfinder: GRABE, Norman, 86405 Meitingen (DE)
(74) Vertreter: Henkel & Partner mbB
(86) Internationale Anmeldenummer: PCT/EP2013/076346
(87) Internationale Veröffentlichungsnummer: WO 2014/090932

(56) Entgegenhaltungen:
- WO-A1-2014/009553
- DE-A1-102004 052 423
- DATABASE WPI Week 200103 Thomson Scientific, London, GB; AN 2001-018948 XP002718328, -& JP 2000 239391 A (SHINETSU CHEM IND CO LTD) 5. September 2000 (2000-09-05)
- DATABASE WPI Week 200705 Thomson Scientific, London, GB; AN 2007-037349 XP002718329, -& JP 2006 316197 A (NITTO KASEI CO LTD) 24. November 2006 (2006-11-24)
- DATABASE WPI Week 201161 Thomson Scientific, London, GB; AN 2011-K78193 XP002718330, -& JP 2011 162792 A (OSAKA GAS CO LTD) 25. August 2011 (2011-08-25)
- DATABASE WPI Week 200220 Thomson Scientific, London, GB; AN 2002-150717 XP002718331, -& JP 2001 220445 A (HITACHI CHEM CO LTD) 14. August 2001 (2001-08-14)
- ROBERT D. MILLER ET AL: "Polysilane high polymers", CHEMICAL REVIEWS, Bd. 89, Nr. 6, 1. September 1989 (1989-09-01), Seiten 1359-1410, XP055012452, ISSN: 0009-2665, DOI: 10.1021/cr00096a006

## Beschreibung

Die vorliegende Erfindung betrifft ein hochmolekulares Polysilan, dessen Herstellungsverfahren, eine aus diesem Polysilan herstellte Polymerfaser, eine daraus hergestellte Siliciumcarbid-Faser, einen aus dieser Faser hergestellten Faserverbundstoff, daraus hergestellte Siliciumcarbid-Keramiken sowie die Verwendung der hergestellten Produkte.

Auf Grund ihrer Härte, Temperaturbeständigkeit, Stabilität und Halbleitereigenschaften finden Siliciumcarbid-enthaltende Keramikbauteile und Verbundstoffe ein breites Anwendungsspektrum in der Halbleiterindustrie, der Elektrotechnik, in der Medizintechnik, im Fahrzeug- und Flugzeugbau sowie in der Raumfahrt.

Im industriellen Maßstab erfolgt die Herstellung von Siliciumcarbid-enthaltenden Keramikbauteilen und Verbundstoffen über die Herstellung eines Polysilans, das in einem Schmelzspinnverfahren zu Fasern versponnen wird. Die Fasern werden dann gehärtet und zu keramischen Siliciumcarbid-Fasern pyrolysiert, die dann zu Keramikbauteilen oder Verbundstoffen weiterverarbeitet werden können.

Die Herstellung des Polysilans erfolgt über eine Wurtz-Kupplung, bei der ein Organohalogensilan, wie beispielsweise Dichlordimethylsilan mit geschmolzenem Natrium zu einem Polydimethylsilan umgesetzt wird.

Nachteilig an dem zuvor beschriebenen Herstellungsverfahren ist jedoch, die geringe Ausbeute an Polysilan sowie dessen geringes Molekulargewicht. Ein hohes Molekulargewicht ist aber Voraussetzung für die Weiterverarbeitung im Schmelzspinnverfahren sowie eine hohe Ausbeute an Fasern. Ferner führt dieses Herstellungsverfahren dazu, dass die Siliciumcarbid-Fasern einen hohen Anteil an freiem Kohlenstoff aufweisen. Dabei handelt es sich um überschüssigen Kohlenstoff, welcher in dem erhaltenen Siliciumcarbid ungebunden vorliegt. Der überschüssige Kohlenstoff verbrennt jedoch leicht bei höheren Temperaturen unter Bildung von Kohlenmonoxid und Kohlendioxid während der weiteren Verarbeitung bzw. Anwendung. Um den Anteil an freiem Kohlenstoff in Siliciumcarbid-Materialien zu verringern, ist es bereits vorgeschlagen worden, dem Polysilan vor der Pyrolyse ein Sinteradditiv, wie beispielsweise Aluminium oder Bor, hinzuzugeben oder das Siliciumcarbid nach der Pyrolyse zu glühen. Allerdings sind diese Verfahren aufwendig. Während bei der erstgenannten Variante unter Zusatz eines Sinteradditivs eine zweistufige Pyrolyse anstatt einer einstufigen Pyrolyse erforderlich ist und mit dieser aufgrund des Zusatzes eines Sinteradditivs zudem ein zusätzlicher Materialaufwand verbunden ist, erfordert die zweitgenannte Variante einen zusätzlichen Arbeitsschritt in Form eines Glühschrittes.

Zudem führt ein Nachglühen zu einem Material mit einer vergleichsweise hohen Porosität und zu Fehlstellen, die die mechanische Stabilität der Fasern herabsetzen und für das Material für den Spinnprozess unbrauchbar machen kann. Ein weiterer Nachteil besteht darin, dass bei Verwendung dieser Methoden vor dem Verspinnen und vor der Pyrolyse zunächst eine Umwandlung des Polysilans zu einem Polycarbosilan vorgenommen werden muss, was einen separaten Arbeitsschritt und die Bereitstellung eines geeigneten Reaktors erfordert. Aus diesen Gründen sind diese beiden Varianten technisch, zeitlich und personell sehr aufwendig. Daher besteht ein Bedarf für ein Verfahren, das ohne zusätzliche Arbeitsschritte mit einem nahezu stöchiometrischen Verhältnis von Silicium zu Kohlenstoff, d.h. ein Siliciumcarbid mit einem Verhältnis von Silicium zu Kohlenstoff von möglichst nahe 1 herstellen kann. JP 2000 239391 offenbart die Herstellung von olefinischen Seitengruppen tragenden Polysilanen unter dem Einsatz von THF als Lösungsmittel.

In der US 5,091,485 wird ein Verfahren zur Herstellung von Polysilanen beschrieben, die durch Wärmebehandlung in Siliciumcarbid überführt werden können. Bei diesem Verfahren wird wenigstens ein Silanmonomer mit der Formel R¹R²SiCl₂, wobei R¹ ein Wasserstoffatom oder ein Kohlenwasserstoffrest und R² ein Vinylrest ist, mit wenigstens einem monochlorierten Comonomer in der Gegenwart von geschmolzenem Natrium in einem organischen Lösungsmittel zu einem Polysilan umgesetzt. Als monochloriertes Comonomer kann dabei eine organische Verbindung, wie beispielsweise ein Benzylchlorid oder ein Organosilan mit der Formel R¹₃SiCl, worin R¹ ein Wasserstoffatom oder ein Kohlenwasserstoffrest sein kann, eingesetzt werden. Allerdings weist dieses Verfahren den Nachteil auf, dass die erhaltenen Polysilane eine verhältnismäßig niedrige Molmasse aufweisen, welche daher bei Raumtemperatur flüssig sind. Aus diesem Grund weisen die erhaltenen Polysilane vor der Umsetzung zu Siliciumcarbid eine schlechte Verarbeitbarkeit auf. Insbesondere ist ein Verspinnen dieser Polysilane zu Fasern und somit eine anschließende Umsetzung zu Siliciumcarbid-Fasern nicht oder nur mit unbefriedigenden Ergebnissen möglich. Abgesehen davon entsteht bei dem in dieser Druckschrift beschriebenen Verfahren ein vergleichsweise hoher Anteil an unlöslichen Polysilanen. Diese unlöslichen Polysilane werden während der Aufarbeitungs- und Reinigungsschritte, die vor der Umsetzung zu Siliciumcarbid erforderlich sind, um ein möglichst reines Polysilan als Ausgangsmaterial zu erhalten, abgetrennt, was die Reaktionsausbeute beträchtlich verringert. Beispielsweise müssen bei der Reaktion entstandene, als Feststoff angefallene Produkte, wie beispielsweise Natriumchlorid, durch Filtration abgetrennt werden. Dabei verbleiben die unlöslichen Polysilananteile in dem Filterkuchen, während die löslichen Polysilananteile in dem Filtrat gelöst vorliegen. Somit kann lediglich der in dem Filtrat befindliche, lösliche Polysilananteil isoliert und einer weiteren Verwendung zugeführt werden, da eine denkbare Isolierung des unlöslichen Anteils aus dem Filterkuchen mit zu vielen zusätzlichen Arbeitsschritten und einem erhöhten technischen, zeitlichen und personellen Aufwand verbunden wäre.

Daher liegt der vorliegenden Erfindung die Aufgabe zu Grunde, ein Polysilan und ein einfaches, schnelles und kostengünstiges Verfahren mit einer hohen Ausbeute an löslichem Polysilan zu dessen Herstellung bereitzustellen, wobei das Polysilan ein hohes Molekulargewicht und gleichzeitig ein nahezu stöchiometrisches Verhältnis von Silicium zu Kohlenstoff von Eins zu Eins aufweist, so dass das Polysilan besser zu Fasern versponnen und zu Faserverbundstoffen und Keramiken verarbeitet werden kann.

Erfindungsgemäß wird diese Aufgabe durch ein Verfahren zur Herstellung eines Polysilans umfassend den Schritt des Reagierens von (i) wenigstens zwei Silanmonomeren und (ii) wenigstens einem Alkalimetall, wobei die Silanmonomere die folgenden Struktureinheiten enthalten:
- wenigstens eine Arylgruppe,
- wenigstens eine Alkylgruppe,
- wenigstens eine Alkenylgruppe sowie
- wenigsten drei Halogenatome, wobei wenigstens drei der Halogenatome an ein Siliciumatom eines der Silanmonomere gebunden sind, dadurch gekennzeichnet, dass der Schritt des Reagierens in einem Ether-haltigen Lösungsmittel stattfindet, wobei der Ether mindestens zwei Sauerstoffatome aufweist, wobei beim Schritt des Reagierens ein Reaktionsinitiator eingesetzt wird.

Durch das Reagieren nach dem vorliegenden Verfahren von wenigstens zwei Silanmonomeren, die wenigstens eine Arylgruppe, wenigstens eine Alkylgruppe, wenigstens eine Alkenylgruppe sowie wenigstens drei Halogenatome, welche an ein Siliciumatom eines der Monomere gebunden sind, aufweisen, mit einem Alkalimetall wird ein Polysilan erhalten, das ein vergleichsweise hohes Molekulargewicht und gleichzeitig einen hohen Anteil an in organischen Lösungsmitteln löslichem Polysilan aufweist. Vielmehr führt dieses Verfahren insbesondere auch zu einem Polysilan, welches in einer anschließenden Pyrolyse in hoher Ausbeute zu Siliciumcarbid mit einem Verhältnis von Silicium zu Kohlenstoff von nahe dem stöchiometrischen Verhältnis von Siliciumcarbid, d.h. mit einem Verhältnis von Silicium zu Kohlenstoff von nahe 1, umgewandelt wird, und, weiches eine exzellente Verarbeitbarkeit insbesondere zu Siliciumcarbid-Fasern aufweist. Ferner ist das erfindungsgemäße Verfahren auch einfach, schnell und kostengünstig durchführbar, da auf zusätzliche Arbeitsschritte, wie die Zugabe eines Sinteradditivs und/oder einen Nachglühschritt bzw. auf ein Nachbrennen, verzichtet werden kann, weil das erfindungsgemäße Verfahren überraschenderweise auch ohne solche zusätzlichen Schritte zu Polysilan führt, welches allenfalls einen geringen Anteil an freiem Kohlenstoff aufweist. Als Konsequenz aus dem Verzicht auf die Entfernung von freiem Kohlenstoff weisen die durch Verspinnen erhaltenen Siliciumcarbid-Fasern eine äußerst geringe Porosität und eine exzellente mechanische Stabilität auf, da in diesen keine Fehlstellen infolge des Entfernens von freiem Kohlenstoff erzeugt werden. Zudem ist auch keine Umwandlung zu Polycarbosilan erforderlich.

Erfindungsgemäß weist der Ether mindestens zwei Sauerstoffatome auf. Dies erhöht das Molekulargewicht des Produkts sowie dessen Ausbeute.

Vorzugsweise findet der Schritt des Reagierens in einem Dioxan-haltigen Lösungsmittel statt. Dies bewirkt überraschender weise eine enorme Erhöhung des Molekulargewichts des Produkts sowie gleichzeitig eine starke Erhöhung der Ausbeute.

Noch bevorzugter wird als Lösungsmittel 50 bis 100%iges, vorzugsweise 80 bis 100%iges, besonders vorzugsweise 100%iges Dioxan verwendet. Dies führt zu noch höheren Ausbeuten und einem noch höheren Molekulargewicht des Polysilans.

Obwohl reines Dioxan als Lösungsmittel vorzuziehen ist, kann neben Dioxan auch ein Cosolvens (Nebenlösungsmittel) eingesetzt werden.

Hierbei kann das Dioxan in Mischungen mit mindestens einem anderen Lösungsmittel, bevorzugt mit 1 bis 4 anderen Lösungsmittel, am meisten bevorzugt mit 2 anderen Lösungsmitteln vorliegen.

Bevorzugte Nebenlösungsmittel sind hierbei Ether, insbesondere die oben beschriebenen Ether, aliphatische Kohlenwasserstoffe oder aromatische Kohlenwasserstoffe, besonders bevorzugte sind Ether oder aromatische Kohlenwasserstoffe, insbesondere bevorzugt Tetrahydrofuran, Dimethylether, Ditehylether, Dipropylether, t-Butyl-methylether, Methylphenylether, Diphenylether, Dibenzylether, Oxiran, Pyran, Dihydropyran und Toluol, Xylol oder Benzol. Noch mehr bevorzugt sind Xylol, Methylphenylether, Toluol und Tetrahydrofuran. Am meisten bevorzugt sind Xylol und Methylphenylether.

Die bevorzugten Lösungsmittelkombinationen tragen stark zur Erhöhung des Molekulargewichts und der Reaktionsausbeute bei. Die Verwendung von Dioxan als Bestandteil des Lösungsmittels ist stark mit dem Molekulargewicht des Produkts korreliert. Je höher die Dioxankonzentration ist, umso höher ist das Molekulargewicht des Polysilans und die entsprechende Reaktionsausbeute.

Als Alkalimetall können bei der Reaktion alle Alkalimetalle eingesetzt werden, wie Lithium, Natrium, Kalium, Rubidium, Cäsium, Francium und beliebige Kombinationen von zwei oder mehr der vorgenannten Metalle. Allerdings ist es bevorzugt, dass bei dem Schritt des Reagierens Natrium, Kalium, eine Mischung aus Natrium und Kalium oder eine Legierung aus Natrium und Kalium eingesetzt wird. Alle vorgenannten Metalle können in flüssiger Form bzw. als Schmelze oder als Feststoff in einem Lösungsmittel suspendiert eingesetzt werden. Allerdings ist es bevorzugt, dass das Alkalimetall in flüssiger Form bzw. als Schmelze eingesetzt wird, wobei die Schmelze vorzugsweise in einem organischen Lösungsmittel durch eine geeignete Rühreinrichtung, wie beispielsweise einen Paddelrührer, fein dispergiert wird. Bei dieser Ausführungsform lässt sich das Alkalimetall besonders feindispers erhalten, welche gegenüber einer grobdispersen Ausführung zu bevorzugen ist. Dabei ist es besonders bevorzugt, dass als Alkalimetall Natrium, eine Mischung aus Natrium und Kalium oder eine Legierung aus Natrium und Kalium eingesetzt wird.

Ein Vorteil bei der Verwendung einer Mischung bzw. Legierung aus Natrium und Kalium liegt darin, dass der Zusatz des Kaliums den Schmelzpunkt des Natriums verringert, und zwar bei entsprechender Menge an zugesetztem Kalium auf unterhalb der Raumtemperatur. Daher ermöglicht der Einsatz einer Mischung oder Legierung aus Natrium und Kalium den Einsatz von flüssigem Alkalimetall bereits bei Raumtemperatur. Bei dieser Ausführungsform ist es bevorzugt, dass die Mischung bzw. Legierung nur so wenig Kalium enthält, wie dies zur Verringerung des Schmelzpunktes von Natrium auf einen gewünschten Wert erforderlich ist, da Kalium im Gegensatz zu Natrium bei der Reaktion zu unerwünschten Nebenreaktionen mit der Doppelbindung der Alkenylgruppe führt.

Besonders bevorzugt wird bei der Reaktion als Alkalimetall ausschließlich Natrium eingesetzt.

Ebenso ist es bevorzugt, dass das Alkalimetall in einem Überschuss von mindestens 10 %, bevorzugt 10 bis 20 %, besonders bevorzugt von 10 % gegenüber der Menge an Halogen in den Edukten eingesetzt wird. Dies führt zu einer Erhöhung des Molekulargewichts.

Um das Molekulargewicht des Polysilans und die Ausbeute noch weiter zu erhöhen, ist es bevorzugt, dass das Alkalimetall stufenweise bevorzugt mindestens 2 Stufen, bevorzugter in 3 Stufen und noch bevorzugter in 4 oder mehr Stufen parallel zur Silanmonomerzugabe der Reaktionsmischung zugegeben wird. Hierbei ist anzunehmen, dass das Molekulargewicht in Abhängigkeit der Anzahl der Stufen zunimmt, das die stufenweise Dosierung des Alkalimetalls die verfügbare Oberfläche des Alkalimetalls erniedrigt und so zu einem höheren Polymerisationsgrad führt. Je nach Versuchsaufbau sollte daher die Anzahl der Stufen, so lange es praktisch umsetzbar ist, erhöht werden. Als praktikabel hat sich die Alkalimetall-Zugabe in bis zu vier oder weniger Stufen erwiesen.

Erfindungsgemäß wird die Ausbeute und das Molekulargewichts des Polysilans dadurch gesteigert, dass beim Schritt des Reagierens ein Reaktionsinitiator eingesetzt wird. Vorzugsweise wird der Reaktionsinitiator mit dem Alkalimetall vorgelegt, vorzugsweise im Kolben vorgemischt, bevor das Silanmonomer(-gemisch) dazugegeben wird. Durch diese Maßnahme kann das Alkalimetall mit dem Reaktionsinitiator schon vorreagieren, was sowohl die verfügbare Oberfläche des Alkalimetalls erniedrigt und Abbruchreaktionen durch Cyclisierungen verhindert und somit zu einem höheren Polymerisationsgrad führt. Bei gleichzeitiger stufenweise Zudosierung des Alkalimetalls kann das Molekulargewicht noch weiter erhöht werden.

Vorzugweise enthält der Initiator folgende Struktureinheiten:
- ein Siliciumatom
- mindestens ein an das Silicium gebundenes Halogenatom
- mindestens zwei an das Silicium gebundene sterisch hindernde Gruppen

Dabei verhindern die gebundenen sterisch anspruchsvollen Gruppen, dass das Initiatormolekül mit einem anderen Initiatormolekül reagiert, was die Reaktion mit dem Alkalimetall und die spätere Polymerisierung beeinträchtigen würde. Auf diese Weise werden ebenso das Molekulargewicht und die Ausbeute des Polysilans erhöht. Als sterisch hindernde Gruppen können alle dem Fachmann bekannten und üblichen Schutzgruppen wie beispielsweise tert.-butyl-Reste, Cycloalkylreste,bevorzugt Cyclohexylreste, andere Alkylreste, die vorzugsweise mindestens 4 Kohlenstoffatome und mindestens eine Verzweigung aufweisen, Arylreste, Mesityl-Reste oder Phenyl-Reste, bevorzugt Phenyl-Reste verwendet werden. Die sterisch hindernden Gruppen sind so konfiguriert, dass sie selbst nicht mit dem Alkalimetall reagieren.

Die Reste der sterisch hindernden Gruppen werden im Folgenden beschrieben. Bei der Verwendung von Arylresten kann es sich um eine unsubstituierte Arylgruppe, wie die vorstehend erwähnte Phenylgruppe, oder um eine substituierte Arylgruppe handeln. In dem letztgenannten Fall kann die wenigstens eine Arylgruppe beispielsweise mit wenigstens einem Rest substituiert sein, welcher aus der Gruppe ausgewählt wird, welche aus linearen Alkylresten, verzweigten Alkylresten, cyclischen Alkylresten, linearen Alkenylresten, verzweigten Alkenylresten, cyclischen Alkenylresten, linearen Alkinylresten, verzweigten Alkinylresten, cyclischen Alkinylresten und beliebigen Kombinationen von zwei oder mehr der vorstehend genannten Reste besteht. Dabei können die vorgenannten Substituenten beispielsweise 1 bis 25 Kohlenstoffatome, bevorzugt 1 bis 15 Kohlenstoffatome, besonders bevorzugt 1 bis 10 Kohlenstoffatome, ganz besonders bevorzugt 1 bis 6 Kohlenstoffatome und höchst bevorzugt 1 bis 4 Kohlenstoffatome aufweisen.

Lediglich beispielsweise seien als geeignete Substituenten Methylreste, Ethylreste, n-Propylreste, Isopropylreste, n-Butylreste, sek-Butylreste, Isobutylreste, tert-Butylreste, Vinylreste, n-Propenylreste, Isopropenylreste, lineare Butenylreste, verzweigte Butenylreste, Ethinylreste, Propinylreste und Butinylreste genannt, welche alleine oder in beliebiger Kombination miteinander eingesetzt werden können. Besonders bevorzugt als Substituent, falls eingesetzt, sind Methylreste, Ethylreste, n-Propylreste, Isopropylreste, n-Butylreste, sek-Butylreste, Isobutylreste, tert-Butylreste und beliebige Kombinationen von zwei oder mehr der vorstehend aufgeführten Reste.

Auch wenn der Einsatz von substituierten Arylgruppen möglich ist, ist es gemäß der vorliegenden Erfindung besonders bevorzugt, dass unsubstituierte Arylgruppen eingesetzt werden, wie insbesondere Phenylgruppen.

Vorzugsweise umfasst der Initiator 2 oder 3 sterisch hindernde Gruppen, besonders bevorzugt 3 sterisch hindernde Gruppen. Es ist bevorzugt, dass als Halogenatom Chlor oder Brom, besonders bevorzugt Chor eingesetzt wird. Es ist bevorzugt, dass der Initiator genau ein Halogenatom umfasst. Vorzugsweise wird als Initiator Chlortriphenylsilan verwendet.

Ferner ist es bevorzugt, dass 0,01 bis 0,25 mol% bezogen auf die Silanmonomere, bevorzugter 0,03 bis 0,15 mol%, noch bevorzugter 0,06 bis 0,1 mol% des Initiators zur Alkalimetalldispersion vor der Zugabe der restlichen Silanmonomere hinzugegeben wird. Die Zugabe des Initiators in diesem Konzentrationsbereich führt insbesondere zu einer Erhöhung des Molekulargewichts und der Ausbeute. Dabei ist es vorzuziehen, einen Initiator einzusetzen, jedoch nur bis zu einer Konzentration von 0,25 mol%, da der Einsatz einer höheren Konzentration an Initiator sowohl die Ausbeute als auch das Molekulargewicht des Polysilans senkt.

Vorzugsweise beträgt der Silananteil des Reaktionsgemisches zwischen 5 bis 50 Volumenprozent, bevorzugter zwischen 5 bis 30 Volumenprozent und noch bevorzugter zwischen 5 bis 20 Volumenprozent ist. Ein Silananteil in dieser Größenordnung führt zu einer Erhöhung des Molekulargewichts des Polysilans. Eine höhere Lösungsmittelmenge würde die Konzentration an Natrium und Silan herabsetzen und zur Erniedrigung des Molekulargewichts führen. Ohne an eine Theorie gebunden werden zu wollen, wird es erachtet, dass der Einsatz eines wenigstens eine Arylgruppe enthaltenden Silanmonomers - zusätzlich zu Silanmonomer(en), welche(s) wenigstens eine Alkenylgruppe, wenigstens eine Alkylgruppe sowie wenigstens drei an ein Siliciumatom gebundene Halogenatome aufweist/aufweisen - in der Reaktion mit dem Alkalimetall zu Polysilan mit einer verbesserten Verarbeitbarkeit und insbesondere mit einer verbesserten Verspinnbarkeit zu einer Polysilanfaser führt. Überraschenderweise wird bei dem Einsatz eines Silanmonomers mit Arylgruppe(n) - wenn gleichzeitig Silanmonomer(e) eingesetzt wird/werden, welche(s) wenigstens eine Alkenylgruppe, wenigstens eine Alkylgruppe sowie wenigstens drei an ein Siliciumatom gebundene Halogenatome aufweist/aufweisen - Polysilan erhalten, welches nach einer Pyrolyse trotz des infolge der Arylgruppe niedrigen Silicium- zu Kohlenstoffverhältnisses dieses Silanmonomers zu Siliciumcarbid mit einem nahe an dem stöchiometrischen Verhältnis von 1 liegenden Silicium- zu Kohlenstoffverhältnis führt. Auch der wenigstens einen Alkenylgruppe wird ein günstiger Einfluss auf die Verarbeitbarkeit des erhaltenen Polysilans zugeschrieben. Zudem erhöht diese Gruppe die Ausbeute an Siliciumcarbid bei der späteren Pyrolyse, was vermutlich darauf zurückzuführen ist, dass die Alkenylgruppe bei der Pyrolyse eine Vernetzung des Polysilans fördert. Des Weiteren entsteht bei der Pyrolyse von Alkenylgruppen kein oder zumindest allenfalls in reduziertem Ausmaß freier, nicht kovalent im Siliciumcarbid gebundener Kohlenstoff, welcher zu einem gegenüber dem stöchiometrischen Verhältnis verminderten Silicium zu Kohlenstoff-Verhältnis führen würde. Zudem kommt dem Silanmonomer mit drei an ein Siliciumatom gebundenen Halogenatomen eine große Bedeutung für die Verarbeitbarkeit und insbesondere für eine exzellente Pyrolysierbarkeit des hergestellten Polysilans zu. Dabei wird angenommen, dass durch die Trifunktionalität dieses Monomers die Ausbildung niedermolekularer, cyclischer Silane verhindert wird, welche bei der späteren Pyrolyse aufgrund ihres niedrigen Siedepunkt verdampfen würden, was bei der Pyrolyse zu Hohlräumen in dem Material und zu einem Ausbeuteverlust führen würde. Schließlich dienen die Alkylgruppen als einfach bereitzustellende und kostengünstige Substituenten, welche die Ausbildung eines nahezu stöchiometrischen Silicium- zu Kohlenstoffverhältnis bei der Pyrolyse des Polysilans begünstigen.

Unter Polysilan wird im Sinne der vorliegenden Erfindung jedes Silan verstanden, welches wenigstens 5, bevorzugt wenigstens 10 und besonders bevorzugt wenigstens 20 miteinander verbundene Siliciumatome aufweist.

Unter Silanmonomer werden im Sinne der vorliegenden Erfindung alle Silane verstanden, welche keine Polysilane sind, d.h. Silane, welche weniger als 5 Siliciumatome, bevorzugt maximal 3 Siliciumatome, besonders bevorzugt maximal 2 Siliciumatome und ganz besonders bevorzugt lediglich ein Siliciumatom aufweisen.

Erfindungsgemäß werden bei dem Verfahren zur Herstellung des Polysilans wenigstens zwei Silanmonomere eingesetzt, welche als Struktureinheiten wenigstens eine Arylgruppe, wenigstens eine Alkylgruppe, wenigstens eine Alkenylgruppe sowie wenigstens drei an ein Siliciumatom gebundene Halogenatome enthalten. Dabei können die einzelnen vorgenannten Gruppen beliebig auf die zwei oder mehr eingesetzten Silanmonomere verteilt werden. Beispielsweise können vier Silanmonomere eingesetzt werden, welche jeweils eine der vorgenannten vier Struktureinheiten aufweist. Alternativ dazu können auch drei oder gar nur zwei Silanmonomere eingesetzt werden, von denen zwei oder drei jeweils wenigstens zwei der vorgenannten vier Struktureinheiten aufweisen. Bevorzugt sind nicht nur die drei Halogenatome, sondern auch jede der anderen der vorgenannten Struktureinheiten, also die wenigstens eine Arylgruppe, die wenigstens eine Alkylgruppe sowie die wenigstens eine Alkenylgruppe, jeweils direkt an ein Siliciumatom des entsprechenden Silanmonomers gebunden.

Grundsätzlich ist es auch möglich, dass einzelne Gruppen der Silanmonomere zwei oder gar mehr der vorstehend genannten vier Struktureinheiten aufweisen. Lediglich beispielsweise sei in diesem Zusammenhang eine Styrylgruppe genannt, welche sowohl eine Alkenylgruppe als auch eine Arylgruppe enthält. In einem solchen Fall erfüllt die Gruppe entsprechend viele der mindestens vier vorstehend genannten Kriterien, also in dem Fall einer Styrylgruppe die beiden Kriterien des Vorliegens wenigstens einer Arylgruppe und des Vorliegens wenigstens einer Alkenylgruppe. In einem solchen Fall enthalten die wenigstens zwei Silanmonomere mithin weniger als vier verschiedene Reste.

Grundsätzlich können in dem erfindungsgemäßen Verfahren ein oder mehr Silanmonomere mit ein oder mehr beliebigen Arylgruppen eingesetzt werden. Gute Ergebnisse werden jedoch insbesondere erhalten, wenn die in der Reaktion eingesetzten Silanmonomere wenigstens eine C4-25-Arylgruppe, bevorzugt eine C6-18-Arylgruppe, weiter bevorzugt eine C6-14-Arylgruppe, besonders bevorzugt eine C6-12-Arylgruppe und ganz besonders bevorzugt eine C6-10-Arylgruppe aufweisen. Am meisten bevorzugt wird in der Reaktion wenigstens ein Silanmonomer eingesetzt, welches als Arylgruppe wenigstens eine Phenylgruppe aufweist.

Bei der wenigstens einen Arylgruppe, welche bevorzugt direkt an ein Siliciumatom eines der Silanmonomere gebunden ist, kann es sich um eine unsubstituierte Arylgruppe, wie die vorstehend erwähnte Phenylgruppe, oder um eine substituierte Arylgruppe handeln. In dem letztgenannten Fall kann die wenigstens eine Arylgruppe beispielsweise mit wenigstens einem Rest substituiert sein, welcher aus der Gruppe ausgewählt wird, welche aus linearen Alkylresten, verzweigten Alkylresten, cyclischen Alkylresten, linearen Alkenylresten, verzweigten Alkenylresten, cyclischen Alkenylresten, linearen Alkinylresten, verzweigten Alkinylresten, cyclischen Alkinylresten und beliebigen Kombinationen von zwei oder mehr der vorstehend genannten Reste besteht. Dabei können die vorgenannten Substituenten beispielsweise 1 bis 25 Kohlenstoffatome, bevorzugt 1 bis 15 Kohlenstoffatome, besonders bevorzugt 1 bis 10 Kohlenstoffatome, ganz besonders bevorzugt 1 bis 6 Kohlenstoffatome und höchst bevorzugt 1 bis 4 Kohlenstoffatome aufweisen.

Lediglich beispielsweise seien als geeignete Substituenten Methylreste, Ethylreste, n-Propylreste, Isopropylreste, n-Butylreste, sek-Butylreste, Isobutylreste, tert-Butylreste, Vinylreste, n-Propenylreste, Isopropenylreste, lineare Butenylreste, verzweigte Butenylreste, Ethinylreste, Propinylreste und Butinylreste genannt, welche alleine oder in beliebiger Kombination miteinander eingesetzt werden können. Besonders bevorzugt als Substituent, falls eingesetzt, sind Methylreste, Ethylreste, n-Propylreste, Isopropylreste, n-Butylreste, sek-Butylreste, Isobutylreste, tert-Butylreste und beliebige Kombinationen von zwei oder mehr der vorstehend aufgeführten Reste.

Auch wenn der Einsatz von substituierten Arylgruppen möglich ist, ist es gemäß der vorliegenden Erfindung besonders bevorzugt, dass unsubstituierte Arylgruppen eingesetzt werden, wie insbesondere Phenylgruppen.

In Weiterbildung des Erfindungsgedankens wird es vorgeschlagen, dass die wenigstens eine als Struktureinheit in den wenigstens zwei Silanmonomeren enthaltene Alkylgruppe, welche bevorzugt direkt an ein Siliciumatom eines der Silanmonomere gebunden ist, eine C1-25-Alkylgruppe, bevorzugt eine C1-15-Alkylgruppe, weiter bevorzugt eine C1-10-Alkylgruppe, noch weiter bevorzugt eine C1-6-Alkylgruppe, besonders bevorzugt eine C1-4-Alkylgruppe und insbesondere bevorzugt eine C1-3-Alkylgruppe ist. Bei den vorstehend aufgeführten Alkylgruppen kann es sich um cyclische, verzweigte oder lineare Alkylgruppen handeln, wobei es bevorzugt ist, dass die wenigstens eine Alkylgruppe linear ist. Beispielsweise kann die wenigstens eine Alkylgruppe eine Methylgruppe, Ethylgruppe, n-Propylgruppe, Isopropylgruppe, n-Butylgruppe, sek-Butylgruppe, Isobutylgruppe, tert-Butylgruppe, n-Pentylgruppe, verzweigte Pentylgruppe, Cycyclopentylgruppe, n-Hexylgruppe, verzweigte Hexylgruppe, Cyclohexylgruppe oder eine beliebige Kombination von zwei oder mehr der vorstehend aufgeführten Gruppen sein.

Ganz besonders gute Ergebnisse werden erhalten, wenn die wenigstens eine als Struktureinheit in den wenigstens zwei Silanmonomeren enthaltene Alkylgruppe eine Ethylgruppe oder höchst bevorzugt eine Methylgruppe ist.

Auch in diesem Fall ist es bevorzugt, dass die als Struktureinheit in den wenigstens zwei Silanmonomeren vorgesehene wenigstens eine Alkylgruppe unsubstituiert ist.

Alternativ dazu ist es auch möglich, substituierte Alkylgruppen einzusetzen, wobei als Substituent alle dem Fachmann hierzu bekannten funktionellen Gruppen eingesetzt werden können. Lediglich beispielhaft seien in diesem Zusammenhang als mögliche Substituenten solche genannt, welche aus der Gruppe bestehend aus Hydroxygruppen, Ethergruppen, Aminogruppen, Halogenen und beliebigen Kombinationen von zwei oder mehr der vorstehend genannten funktionellen Gruppen ausgewählt werden.

Auch bezüglich der chemischen Natur der als Struktureinheit eingesetzten wenigstens einen Alkenylgruppe, welche bevorzugt direkt an ein Siliciumatom eines der Silanmonomere gebunden ist, ist die vorliegende Erfindung nicht besonders beschränkt. Beispielsweise kann es sich bei der wenigstens einen Alkenylgruppe um jede beliebige cyclische, verzweigte oder lineare C2-25-Alkenylgruppe handeln, wobei gute Ergebnisse insbesondere mit einer C2-15-Alkenylgruppe, weiter bevorzugt mit einer C2-10-Alkenylgruppe, besonders bevorzugt mit einer C2-6-Alkenylgruppe und ganz besonders bevorzugt mit einer C2-4-Alkenylgruppe erhalten werden. Höchst bevorzugt ist die wenigstens eine Alkenylgruppe eine Vinyl-gruppe.

Alle vorstehend aufgeführten Alkenylgruppen können substituiert oder unsubstituiert sein, wobei als Substituenten alle vorstehend in Bezug auf die Alkylgruppen und Arylgruppen genannten Beispiele eingesetzt werden können. Wenn substituierte Alkenylgruppen eingesetzt werden, ist es bevorzugt, dass die wenigstens eine Alkenylgruppe an wenigstens einem Kohlenstoffatom der Doppelbindung mit einem C1-25-Alkylrest, weiter bevorzugt mit einem C1-15-Alkylrest, noch weiter bevorzugt mit einem C1-10-Alkylrest, besonders bevorzugt mit einem C1-6-Alkylrest und ganz besonders bevorzugt mit einem C1-4-Alkylrest substituiert ist. Beispiele für einen entsprechenden Substituenten sind solche, welche aus der Gruppe bestehend aus Methylresten, Ethylresten, n-Propylresten, Isopropylresten, n-Butylresten, Isobutylresten, sek-Butylresten, tert-Buylresten und beliebigen Kombinationen von zwei oder mehr der vorstehend genannten Alkylreste besteht.

Allerdings ist es ganz besonders bevorzugt, dass die wenigstens eine Alkenylgruppe unsubstituiert ist, und höchst bevorzugt, dass die wenigstens eine Alkenylgruppe eine unsubstituierte Vinylgruppe ist.

Bei den wenigstens drei an ein Siliciumatom eines der Silanmonomere gebundenen Halogenatomen kann es sich um alle beliebigen Halogenatome, d.h. Fluor, Chlor, Brom oder lod, handeln, wobei die wenigstens drei Halogenatome gleich oder verschieden sein können. Beispielsweise können an ein Siliciumatom eines der Silanmonomere ein Fluoratom, ein Bromatom sowie ein lodatom gebunden sein. Allerdings ist es bevorzugt, dass drei gleiche Halogenatome an ein Siliciumatom eines der Silanmonomere gebunden sind, wobei es ganz besonders bevorzugt ist, dass die wenigstens drei Halogenatome jeweils Chlor sind.

Wie vorstehend dargelegt, ist es bevorzugt, dass als Struktureinheiten unsubstituierte Gruppen eingesetzt werden. Daher wird es in Weiterbildung des Erfindungsgedankens vorgeschlagen, dass wenigstens eine der wenigstens einen Arylgruppe, der wenigstens einen Alkylgruppe und der wenigstens einen Alkenylgruppe, bevorzugt wenigstens zwei der wenigstens einen Arylgruppe, der wenigstens einen Alkylgruppe und der wenigstens einen Alkenylgruppe und besonders bevorzugt alle der wenigstens einen Arylgruppe, der wenigstens einen Alkylgruppe und der wenigstens einen Alkenylgruppe unsubstituiert sind.

Zusätzlich zu den vier vorstehend genannten Struktureinheiten, d.h. zusätzlich zu der wenigstens einen Arylgruppe, zu der wenigstens einen Alkylgruppe, zu der wenigstens einen Alkenylgruppe sowie zu den wenigstens drei an ein Siliciumatom eines der Silanmonomere gebundenen Halogenatomen, kann wenigstens eines der Silanmonomere optional ein oder mehrere direkt an dessen Siliciumaom gebundene(s) Wasserstoffatom(e), d.h. wenigstens eine SiH-Gruppe, aufweisen. Vorzugsweise liegt bei dieser Ausführungsform in den Silanmonomeren nur eine SiH-Gruppe vor. Durch das Vorliegen der SiH-Gruppe(n) wird die Vernetzbarkeit erhöht und somit ein höher vernetztes Polysilan erhalten.

Gemäß einer besonders bevorzugten Ausführungsform der vorliegenden Erfindung werden bei dem Schritt des Reagierens wenigstens drei Silanmonomere eingesetzt, welche die folgenden allgemeinen Formeln (1) bis (3) aufweisen:

(1) R¹SiX₃,

(2) R²R³SiX₂ sowie

(3) R⁴R⁵SiX₂,

worin:
R¹ eine Arylgruppe ist, R² eine Alkenylgruppe ist, R³, R⁴, R⁵, gleich oder verschieden, jeweils eine Alkylgruppe oder H, mit der Maßgabe, dass wenigstens einer von R³, R⁴ oder R⁵ eine Alkylgruppe ist, sind sowie X jeweils ein Halogenatom ist.

Als die in den vorstehenden allgemeinen Formeln genannten Gruppen, d.h. Arylgruppen, Alkenylgruppen, Alkylgruppen und Halogenatome, können diejenigen eingesetzt werden, welche in den vorstehenden Ausführungsformen im Detail genannt sind. Demnach können als Halogenatome alle Halogenatome eingesetzt werden, wobei die einzelnen Halogenatome gleich oder verschieden sein können. Bevorzugt sind alle Halogenatome Chloratome. Bei der Arylgruppe R¹ kann es sich demnach insbesondere um alle substituierten und unsubstituierten C4-25-Arylgruppen, bevorzugt C6-18-Arylgruppen, weiter bevorzugt C6-14-Arylgruppen, besonders bevorzugt C6-12-Arylgruppen und ganz besonders bevorzugt C6-10-Arylgruppen handeln. Bevorzugt handelt es sich bei der Arylgruppe R¹ um eine unsubstituierte Arylgruppe und höchst bevorzugt um eine Phenylgruppe. Bei der Alkenylgruppe R² kann es sich demnach insbesondere um alle substituierten und unsubstituierten, cyclischen, verzweigten und linearen C2-25-Alkenylgruppe, bevorzugt C2-15-Alkenylgruppen, weiter bevorzugt C2-10-Alkenylgruppen, besonders bevorzugt C2-6-Alkenylgruppen und ganz besonders bevorzugt C2-4-Alkenylgruppen handeln. Bevorzugt handelt es sich bei der Alkenylgruppe R² um eine unsubstituierte, lineare Alkenylgruppe und höchst bevorzugt um eine Vinylgruppe. Bei den Alkylgruppen R³, R⁴ und R⁵ kann es sich demnach insbesondere um alle substituierten und unsubstituierten, cyclischen, verzweigten und linearen C1-25-Alkylgruppen, bevorzugt C1-15-Alkylgruppen, weiter bevorzugt C1-10-Alkylgruppen, noch weiter bevorzugt C1-6-Alkylgruppen, besonders bevorzugt C1-4-Alkylgruppen und insbesondere bevorzugt C1-3-Alkylgruppen handeln. Bevorzugt handelt es sich bei den Alkylgruppen R³, R⁴ und R⁵ um eine unsubstituierte, lineare Alkylgruppe, ganz besonders bevorzugt um eine Ethylgruppe und höchst bevorzugt um eine Methylgruppe.

Besonders gute Ergebnisse werden bei der vorstehenden Ausführungsform insbesondere erhalten, wenn die einzelnen Reste in den allgemeinen Formeln (1) bis (3) wie folgt sind:
R¹ ist eine Phenylgruppe
R² ist eine Vinylgruppe,
jeder von R³, R⁴, R⁵ ist, gleich oder verschieden, eine Alkylgruppe oder H, mit der Maßgabe, dass wenigstens einer von R³, R⁴ oder R⁵ eine Alkylgruppe ist, sowie
X ist jeweils ein Chloratom.

Bei der vorstehenden Ausführungsform werden als Alkylgruppen R³, R⁴ und R⁵ vorzugsweise C1-22-Alkylgruppen, insbesondere C1-12-Alkylgruppen, weiter bevorzugt C1-6-Alkylgruppen, noch weiter bevorzugt C1-4-Alkylgruppen, besonders bevorzugt C1-3-Alkylgruppen, ganz besonders bevorzugt C1-2-Alkylgruppen und höchst bevorzugt Methylgruppen eingesetzt. Daher ist es besonders bevorzugt, wenn die einzelnen Reste in den allgemeinen Formeln (1) bis (3) wie folgt sind:
R¹ ist eine Phenylgruppe,
R² ist eine Vinylgruppe,
jeder von R³, R⁴, R⁵ ist, gleich oder verschieden, eine C1-22-Alkylgruppe,bevorzugt eine C1-12-Alkylgruppe, weiter bevorzugt eine C1-6-Alkylgruppe, noch weiter bevorzugt eine C1-4-Alkylgruppe, besonders bevorzugt eine C1-3-Alkylgruppe, ganz besonders bevorzugt eine C1-2-Alkylgruppe und höchst bevorzugt eine Methylgruppe, sowie X ist jeweils ein Chloratom.

Gemäß einer ganz besonders bevorzugten Ausführungsform der vorliegenden Erfindung werden bei dem Schritt des Reagierens als Silanmonomere Phenyltrichlorsilan, Dichlormethylvinylsilan und Dichlordimethylsilan eingesetzt, d.h. drei Silanmonomere gemäß den allgemeinen Formeln (1) bis (3):

R¹SiX₃,

R²R³SiX₂

sowie

R⁴R⁵SiX₂,

worin:
R¹ eine Phenylgruppe ist,
R² eine Vinylgruppe ist,
R³, R⁴, R⁵ jeweils eine Methylgruppe sind sowie
X ein jeweils Chloratom ist.

Die vorstehenden drei Silanmonomere können alleine oder optional zusammen mit einem oder mehreren zusätzlichen Silanmonomeren eingesetzt werden. Allerdings ist es im Hinblick auf das Erreichen einer guten Verarbeitbarkeit des daraus hergestellten Polysilans und das Erreichen eines zumindest nahezu stöchiometrischen Silicium- zu Kohlenstoff-Verhältnisses nach der Pyrolyse des daraus hergestellten Polysilans bevorzugt, dass bei der Reaktion als Silanmonomere nur die drei vorgenannten Silanmonomere, d.h. Phenyltrichlorsilan, Dichlormethylvinylsilan und Dichlordimethylsilan, eingesetzt werden.

Grundsätzlich können die einzelnen Silanmonomere in der Reaktion in jedem beliebigen Verhältnis miteinander eingesetzt werden. Bei den vorstehenden Ausführungsformen, in denen wenigstens drei Silanmonomere mit den allgemeinen Formeln (1) bis (3) eingesetzt werden, ist es im Hinblick auf das Erreichen einer guten Verarbeitbarkeit des daraus hergestellten Polysilans und das Erreichen eines zumindest nahezu stöchiometrischen Silicium- zu Kohlenstoff-Verhältnisses nach der Pyrolyse des daraus hergestellten Polysilans bevorzugt, dass bei der Reaktion der Stoffmengenanteil des Silanmonomers mit der allgemeinen Formel (1) 15 bis 30 mol%, der Stoffmengenanteil des Silanmonomers mit der allgemeinen Formel (2) 5 bis 40 mol% sowie der Stoffmengenanteil des Silanmonomers mit der allgemeinen Formel (3) 30 bis 80 mol%, bevorzugt 43 bis 66 mol% bezogen auf die Summe dieser drei Stoffmengen beträgt. Sofern wenigstens eines der Silanmonomere wenigstens eine SiH-Gruppe aufweist, liegt der Anteil dieses Silanmonomers vorzugsweise bei 10 bis 40 mol%.

Eine besonders gute Verarbeitbarkeit und insbesondere Verspinnbarkeit des hergestellten Polysilans sowie ein Silicium- zu Kohlenstoff-Verhältnis nach der Pyrolyse des daraus hergestellten Polysilans von besonders nahe an 1 wird überraschenderweise erhalten, wenn bei den vorstehenden Ausführungsformen, in denen wenigstens drei Silanmonomere mit den allgemeinen Formeln (1) bis (3) eingesetzt werden, bei der Reaktion der Stoffmengenanteil des Silanmonomers mit der allgemeinen Formel (1) 16 bis 20 mol%, der Stoffmengenanteil des Silanmonomers mit der allgemeinen Formel (2) 25 bis 30 mol% sowie der Stoffmengenanteil des Silanmonomers mit der allgemeinen Formel (3) 53 bis 59 mol% bezogen auf die Summe dieser drei Stoffmengen beträgt. Sofern wenigstens eines der Silanmonomere wenigstens eine SiH-Gruppe aufweist, liegt der Anteil dieses Silanmonomers vorzugsweise bei 25 bis 30 mol%.

Der Fachmann kennt die entsprechenden Reaktionstemperaturen für die Wurtz-Kupplung, so dass eine hinreichend hohe Reaktionsgeschwindigkeit vorliegt. Allerdings ist es aus den vorstehenden Gründen bevorzugt, nämlich zwecks Erreichens einer besonders homogenen Dispersion von Alkalimetall in dem die Silanmonomere enthaltenden Lösungsmittel, dass die Reaktion bei einer Temperatur durchgeführt wird, bei welcher das Alkalimetall als Schmelze vorliegt. Im Falle von Natrium liegt die Reaktionstemperatur daher bevorzugt bei mindestens 97,7 °C und im Falle von Kalium bevorzugt bei mindestens 63,4 °C. Sofern eine Mischung bzw. Legierung von Natrium und Kalium eingesetzt wird, kann die Reaktionstemperatur infolge der Schmelzpunkterniedrigung entsprechend herabgesetzt werden. In Abhängigkeit von dem konkret eingesetzten Alkalimetall kann der Schritt des Reagierens daher bei einer Temperatur von 0 bis 200 °C, bevorzugt von 20 bis 180 °C, weiter bevorzugt von 60 bis 160 °C, besonders bevorzugt von 80 bis 160 °C, ganz besonders bevorzugt von 90 bis 140 °C und höchstbevorzugt von 98 bis 130 °C durchgeführt werden.

Um Nebenreaktionen und insbesondere Oxidationsreaktionen soweit wie möglich zu unterbinden, wird es in Weiterbildung des Erfindungsgedankens vorgeschlagen, die Reaktion unter Inertgas, wie Stickstoff oder Argon, durchzuführen.

Es ist ferner bevorzugt, dass die Rührgeschwindigkeit während des Schritts des Reagierens mindestens 50 Umdrehungen pro Minute, bevorzugt zwischen 150 und 300 Umdrehungen beträgt. Eine geringere Rührgeschwindigkeit führt zur Bildung einer bimodalen Molekulargewichtsverteilung mit unerwünscht hohem Anteil an Oligomeren.

Nach der Reaktion werden die ungelösten Bestandteile, welche unter anderem unreagiertes Alkalimetall enthalten, durch Filtration abgetrennt, so dass das Zielpolysilan in dem Filtrat erhalten wird und daraus durch Verdampfen des Lösungsmittels isoliert werden kann.

Die Filtration des Polysilans beispielsweise zur Entfernung der entstandenen Salze, des unlöslichen Silans und des anschließend zu deaktivierenden überschüssigen Alkalimetalls erfolgt vorzugsweise bei Temperaturen höher als 30 °C, besonders bevorzugt bei 50 bis 75 °C. Die Filtration bei höheren Temperaturen erhöht die Ausbeute an Polysilan.

Ein weiterer Gegenstand der vorliegenden Patentanmeldung ist ein Polysilan, welches mit dem zuvor beschriebenen Verfahren erhältlich ist und bei 100°C eine mit einem Rotationsrheometer Physica MCR 301 der Firma Anton Parr mit einer Platte/Platte-Geometrie mit 300 bis 500 mg der jeweiligen Probe gemessene Viskosität von 1500 bis 3000 Pa.s aufweist. Ein solches Polysilan zeichnet sich durch eine vergleichsweise hohe Molmasse aus und ist zudem überraschenderweise zu Siliciumcarbid mit einem nahezu stöchiometrischen Silicium- zu Kohlenstoff-Verhältnis pyrolysierbar.

Das erfindungsgemäße Polysilan weist vorzugweise ein Molekulargewicht von mindestens 5000 Da, bevorzugter von mindestens 7500 Da und noch bevorzugter von mindestens 10000 Da auf.

Gemäß der vorliegenden Erfindung wird Molekulargewicht mit einer Gel- Permeations-Chromatographie ermittelt, und zwar gemäß der DIN 55672. Auf Grund seines hohen Molekulargewichts ist es möglich, ein bei Raumtemperatur festes Material zu erhalten, was ausgezeichnet zu Fasern versponnen werden kann.

Gemäß einer bevorzugten Ausführungsform der vorliegenden Erfindung weist das erfindungsgemäße Polysilan, darauf umgerechnet, dass die Summe der nachstehend genannten Gruppen im Polysilan insgesamt 100% beträgt, 40 bis 85 %, besonders bevorzugt 50 bis 80 % und am meisten bevorzugt 60 bis 70 % Alkylgruppen auf, 5 bis 30 %, weiter bevorzugt 10 bis 20 % und besonders bevorzugt 10 bis 15 % Alkenylgruppen auf, 5 bis 30 %, besonders bevorzugt 10 bis 25 % und am meisten bevorzugt 15 bis 20 % Arylgruppen auf und 0,1 bis 10 %, besonders bevorzugt 0,2 bis 5 % Wasserstoffatome auf.

Da, wie vorstehend in Bezug auf das Verfahren dargelegt, die Alkylgruppen bevorzugt Methylgruppen sind, die Alkenylgruppen bevorzugt Vinylgruppen sind und die Arylgruppen bevorzugt Phenylgruppen sind, ist es besonders bevorzugt, dass das erfindungsgemäße Polysilan, darauf umgerechnet, dass die Summe der nachstehend genannten Gruppen im Polysilan insgesamt 100% beträgt, 40 bis 85 %, besonders bevorzugt 50 bis 80 % und am meisten bevorzugt 60 bis 70 % Methylgruppen auf, 5 bis 30 %, weiter bevorzugt 10 bis 20 % und besonders bevorzugt 10 bis 15 % Vinylgruppen auf, 5 bis 30 %, besonders bevorzugt 10 bis 25 % und am meisten bevorzugt 15 bis 20 % Phenylgruppen auf und 0,1 bis 10 %, besonders bevorzugt 0,2 bis 5 % Wasserstoffatome auf. Diese Zahlenwerte beziehen sich, wie bereits im vorherigen Absatz beschrieben, darauf, dass die Gesamtanzahl der vorstehend genannten Substituenten 100% beträgt. Diese Zahlen geben also das molare Verhältnis der genannten Substituenten untereinander wieder. Diese Anteile an Arylgruppen, Alkylgruppen, Alkenylgruppen und Wasserstoffatomen, lassen sich im erfindungsgemäßen Polysilan beispielsweise mittels ¹H-NMR Spektroskopie leicht ermitteln.

Das erfindungsgemäße Polysilan weist bei 100°C eine Viskosität von 1500 bis 3000 Pa s auf, bevorzugt sind Werte von 1800 bis 2400 Pa s bei 100°C, besonders bevorzugt 1900 bis 2200 Pa s bei 100°C. Aufgrund der Viskosität in diesem Größenbereich ist das Polysilan bei dieser Temperatur besonders gut im Schmelzspinnverfahren einsetzbar. Sollen die Polysilane bei einer anderen Temperatur verarbeitet werden, so gilt es die Erweichungstemperatur über angepasste Synthesebedingungen zu beeinflussen. Eine niedirgere Molare Masse des Polysilans führt wiederum zur Erniedrigung der Erweichungstemperatur bzw. der Schmelzviskosität.

Das erfindungsgemäße Polysilan kann im Schmelzspinnverfahren oder im Trockenspinnverfahren zu Fasern verarbeitet sein. Dabei lassen sich unter Benutzung des erfindungsgemäßen Polysilans Fasern auch mit dünnen Durchmessern herstellen. Auf Grund ihrer Flexibilität lassen sich die erfindungsgemäß hergestellten Fasern ausgezeichnet verarbeiten. Dabei ist die Anzahl an Abrissen im Zuge der Faserherstellung deutlich reduziert und die Ausbeute an Fasern sowie deren Länge deutlich erhöht. Es können dabei nicht nur Fasern mit Durchmessern bekannt aus dem Stand der Technik mit einem Durchmesser von 10 bis 100 µm herstellen, sondern auch Fasern mit kleineren Durchmessern erhalten werden. Die Verwendung von dünnen Düsen im Spinnprozess führen zu dünnen Keramikfasern, deren Herstellung jedoch durch hohe Abrissraten der Fasern beeinträchtigt wird. Überraschend wurde festgestellt, dass bei gesponnenen Faserdurchmessern von 5 bis 10 µm bei Verwendung des erfindungsgemäßen Polysilans im Spinnprozess die Abrissrate deutlich reduziert werden kann.

Die vorliegende Erfindung umfasst daher auch Polysilan-Fasern, die durch ein Schmelzspinnverfahren oder ein Trockenspinnverfahren hergestellt worden sind.

Die erfindungsgemäß hergestellten Polysilan-Fasern weisen einen Durchmesser von 1 bis 100 µm, bevorzugt von 5 bis 50 µm, mehr bevorzugt von 8 bis 35 µm und ganz besonders bevorzugt von 10 bis 25 µm auf. Dünne Fasern sind für die Herstellung von Keramiken in der Elektrotechnik, der Halbleitertechnik, der Medizintechnik sowie in der Raumfahrt besonders attraktiv.

Vorzugsweise weist die Verteilung der Faserdurchmesser in den erfindungsgemäß hergestellten Polysilan-Fasern eine Standardabweichung zwischen 5 bis 15 %, vorzugsweise 5 bis 8% des mittleren Faserdurchmessers auf. Die Verteilung der Faserdurchmesser ist damit sehr homogen, was die Herstellung von Keramiken bzw. Faserverbundstoffen qualitativ verbessern kann.

Vorzugsweise werden die erfindungsgemäß hergestellten Polysilan-Fasern nach dem Faserspinnen durch chemische oder physikalische Härtung, beispielsweise thermische Härtungsverfahren, Strahlungshärtung oder durch Reaktion mit Härtungsmedien (z.B. Gasen oder Dämpfen) behandelt. Das Härten kann beispielsweise mit UV-Licht und/oder Temperaturbehandlung, welche Teil der Pyrolyse sein kann, durchgeführt werden.

Vorzugsweise können die erfindungsgemäß hergestellten und gegebenenfalls gehärteten Fasern pyrolisiert werden und zu keramischen Fasern verarbeitet werden.

Daher betrifft die vorliegende Erfindung Siliciumcarbid-Fasern, die aus den erfindungsgemäß hergestellten Polysilanfasern durch Pyrolyse zu keramischen Fasern verarbeitet worden sind.

Da die erfindungsgemäßen Polysilan-Fasern sehr dünne Durchmesser und eine sehr homogene Durchmesserverteilung, wie oben dargelegt, aufweisen, zeigen auch die erfindungsgemäßen Siliciumcarbid-Fasern sehr dünne Durchmesser und eine homogene Durchmesserverteilung. Daher sind die erfindungsgemäßen Siliciumcarbid-Fasern qualitativ sehr hochwertig und können ausgezeichnet zu Faserverbundstoffen und Keramiken verarbeitet werden.

Grundsätzlich kann die Pyrolyse auf alle dem Fachmann bekannten Weisen und mit jedem Temperaturprofil durchgeführt werden. Gute Ergebnisse werden dabei jedoch insbesondere erhalten, wenn die Pyrolyse unter Sauerstoffausschluss, also in einer Intergasatmosphäre, wie Stickstoff, so durchgeführt wird, dass die Maximaltemperatur 400 bis 1800 °C, bevorzugt 600 bis 1200 °C und besonders bevorzugt 800 bis 1000 °C beträgt. Bei der Pyrolyse ist die Aufheizrate auf einen Wert zwischen 0,1 und 200 K/Min., bevorzugt zwischen 0,5 und 50 K/Min., besonders bevorzugt zwischen 0,75 und 10 K/Min. und ganz besonders bevorzugt auf einen Wert von etwa 1,0 K/Min. einzustellen. Bei 400 bis 800 °C wird die Umwandlung des Polysilans zu dem Siliciumcarbid abgeschlossen.

Allerdings ist die Behandlung bei einer höheren Temperatur notwendig, um die gewünschte Gefügeausbildung zu erreichen.

Vorzugsweise weist die Siliciumcarbid-Faser einen Kristallisationsgrad von 20 bis 80 %, besonders bevorzugt von 40 bis 70 % und ganz besonders bevorzugt von 50 bis 60 % aufweist. Allerdings ist es auch möglich, dass die Siliciumcarbid-Faser vollständig amorph ist oder vollständig kristallin ist, so dass erfindungsgemäß Kristallisationsgrade von 0 bis 100 % möglich sind.

Gemäß einer weiteren bevorzugten Ausführungsform der vorliegenden Erfindung liegt die Korngröße des Siliciumcarbid der Siliciumcarbid-Faser in einem Bereich von 0 bis 20 µm, bevorzugt von 0,01 bis 15 µm, besonders bevorzugt von 0,03 bis 10 µm, ganz besonders bevorzugt von 0,05 bis 5 µm und höchst bevorzugt von 0,1 bis 2 µm.

Schließlich kann die Siliciumcarbid-Faser, wie grundsätzlich bekannt, mit Schlichte versehen sein.

Wie vorstehend dargelegt, zeichnet sich das Siliciumcarbid der erfindungsgemäßen Siliciumcarbid-Faser durch ein nahezu stöchiometrisches Silicium- zu KohlenstoffVerhältnis, also durch einen niedrigen Gehalt an freiem Kohlenstoff, aus.

Vorzugsweise ist die Siliciumcarbid-Faser dadurch gekennzeichnet, dass das das Verhältnis der Stoffmengen von Silicium zu Kohlenstoff in dem Siliciumcarbid vorzugsweise 0,75 bis 1,25, weiter bevorzugt 0,8 bis 1,20, besonders bevorzugt 0,85 bis 1,15, ganz besonders bevorzugt 0,9 bis 1,0 und höchst bevorzugt 0,95 bis 1,0 beträgt.

Gemäß der vorliegenden Erfindung erfolgt die Bestimmung des Stoffmengenverhältnisses von Silicium zu Kohlenstoff durch Elementaranalyse. Dabei erfolgt die Bestimmung des Kohlenstoffgehaltes gemäß der vorliegenden Erfindung nach dem Prinzip der Probenverbrennung und der Analyse der Verbrennungsgase mittels Infrarotabsorption. Dabei wird die zu analysierende Probe in einem Hochfrequenz-Ofen induktiv auf Temperaturen zwischen 1250°C und 1400°C erhitzt und durch Sauerstoffzufuhr verbrannt, wobei das entstandene CO₂ durch eine Infrarot-Zelle geleitet wird. Über die Stärke der Absorption der dazugehörigen Bande kann auf die Menge geschlossen werden. Auch die Bestimmung des Sauerstoffgehaltes erfolgt nach dem Prinzip der Probenverbrennung und der Analyse der Verbrennungsgase mittels Infrarotabsorption. Als Trägergas wird dabei Helium verwendet. Die zu analysierende Probe wird in einem Hochfrequenz-Ofen induktiv auf Temperaturen zwischen 1250°C und 1400°C erhitzt, wobei der in der Probe enthaltene Sauerstoff mit dem Graphittiegel reagiert, in dem sich die Probe befindet, und das entstandene CO₂ und CO wird durch eine Infrarot-Zelle geleitet. Über die Stärke der Absorption der dazugehörigen Bande kann auf die Menge geschlossen werden. Da sich in der Probe keine weiteren Elemente befinden, kann der Siliciumgehalt durch Differenzbildung aus den vorher erhaltenen Kohlenstoff- und Sauerstoffwerten, bezogen auf 100 %, erhalten werden.

Weiterhin können die erfindungsgemäß hergestellten Fasern in einem Faserverbundwerkstoff eingesetzt werden, dadurch gekennzeichnet, dass er eine erfindungsgemäße Siliciumcarbid-Faser sowie ein Matrixmaterial umfasst.

Ebenfalls können die erfindungsgemäß hergestellten Polymerfasern in einem Faserverbundwerkstoff eingesetzt werden, dadurch gekennzeichnet, dass er eine erfindungsgemäße Polysilan-Faser sowie ein Matrixmaterial umfasst. Gegebenenfalls wird die Polysilanfaser durch eine Behandlung des Verbundwerkstoffes in eine Keramikfaser umgewandelt.

Dabei können die Fasern oder die Matrix aus dem erfindungsgemäßen Siliciumcarbid zusammengesetzt sein. Weitere mögliche Stoffsysteme für Fasern oder Matrix sind SiCN, SiBNC, Al₂O₃, SiO₂, TiO₂, ZrO₂ sowie Mischungen daraus, wobei es bevorzugt ist, dass sowohl die Fasern als auch die Matrix aus Siliciumcarbid zusammengesetzt sind.

Ferner können die Polymer- oder Keramikfasern in Form von Gelegen, Fasermatten, Geweben, Gewirken, Gestricken, Vliesen und/oder Filzen vorliegen, wobei Gelege und/oder Fasermatten bevorzugt sind.

Zur Herstellung des erfindungsgemäßen Verbundwerkstoffs können wie vorstehend hergestellte Siliciumcarbid-Fasern (oder anderen Keramikfasern) enthaltende Faserstrukturen mit dem erfindungsgemäß beschriebenen Polysilan (oder anderen Polymerprecursoren) imprägniert und anschließend wie vorstehend beschrieben pyrolysiert werden. Optional kann zwischen dem Imprägnieren und dem Pyrolysieren eine Härtung durchgeführt werden, wobei das Härten beispielsweise mit UV-Licht und/oder durch Temperaturbehandlung erfolgen kann. Danach kann der so hergestellte Körper ein-oder mehrmals mit Polysilan imprägniert, gehärtet und pyrolysiert werden.

Weiterhin kann das beschriebene Polysilan als Schmelze oder Lösung auf beliebige Fasern aufgetragen werden und stellt nach der Pyrolyse einen Schutz, z.B. Oxidationsschutz dar.

Aufgrund seiner hervorragenden Eigenschaften, insbesondere seiner hervorragenden Hochtemperaturbeständigkeit und hohen Härte, eignen sich das erfindungsgemäße Polysilan, die erfindungsgemäße Siliciumcarbid-Faser sowie hergestellte Siliciumcarbid-Formkörper und erfindungsgemäße Siliciumcarbid-haltige Faserverbundwerkstoffe erfindungsgemäße Formkörper und/oder Faserverbundwerkstoff insbesondere für Anwendungen, in denen das Material hohen Temperaturen und oxidativen Bedingungen ausgesetzt sind, und zwar beispielsweise im Leichtbau, in der Elektroindustrie, in der Raumfahrt, im Kraftfahrzeugbau und im Flugzeugbau. Aufgrund des kostengünstigeren Herstellungsverfahrens der vorliegenden Erfindung ist insbesondere die Verwendung des erfindungsgemäßen Formkörpers und/oder Faserverbundwerkstoffs als Material für Kupplungs- oder Bremsscheiben bevorzugt.

### Beispiele

Nachfolgend wird die vorliegende Erfindung anhand von Ausführungsbeispielen beschrieben, welche die vorliegende Erfindung erläutern, aber nicht beschränken.

Insbesondere werden die Ausbeute und das Molekulargewicht der Ausführungsbeispiele mit einem Vergleichsbeispiel aus dem Stand der Technik verglichen. Die Ergebnisse sind in Tabelle 1 zusammengefasst. In Tabelle 1 steht Mn für das arithmetische Mittel des Molekulargewichts der hergestellten Polysilane in Dalton, Mw für das Gewichtsmittel des Molekulargewichts der hergestellten Polysilane und Mp für das Molekulargewicht des höchsten Peaks des Chromatogramms, wobei alle angegebenen Molekulargewichtswerte experimentell mittels Gel-Permeations-Chromatographie bestimmt werden. Für die Durchführung der Gel-Permeations-Cromatographie wird ein "PL-GPC 50Plus" GPC System der Firma Polymer Laboratories mit THF-Eluent, PL-Gel Mixed-C Trennsäulen und Brechungsindexdetekor verwendet. Die Auswertung erfolgte mit der Software Cirrus GPC Version 3.1 und konventioneller Kalibration mit Polystyrolstandards.

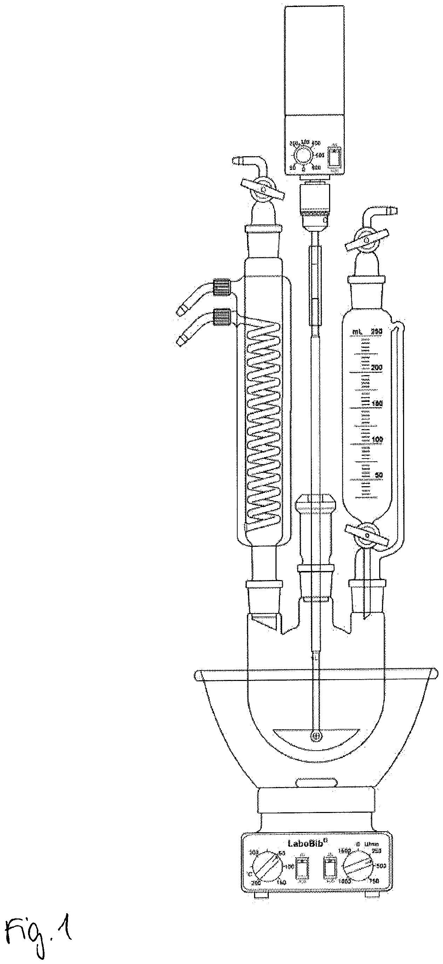

Die Figur 1 zeigt den Versuchsaufbau zur Synthese des Polysilans. An einem 2-Liter Dreihalskolben sind ein Rückflusskühler, ein mechanischer Rührer und ein 500 ml Tropftrichter angeschlossen.

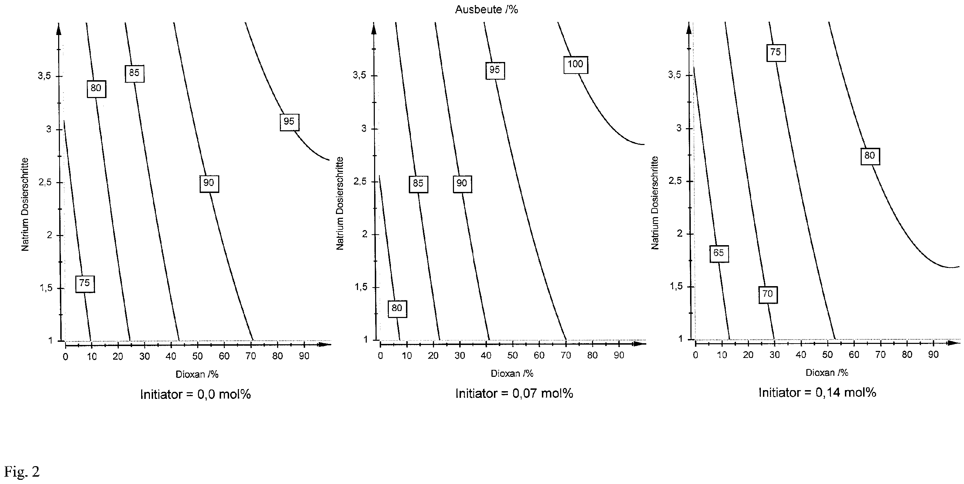

Die Figur 2 zeigt graphisch das Ergebnis einer statistischen Versuchsplanungsanalyse und beschreibt den Einfluss von Dioxan, von einem Initiator und der Stufenanzahl der Natriumdosierung auf die Ausbeute des Polysilans in Prozent. Es ist zu erkennen, dass mit höherer Dioxankonzentration als Lösungsmittel höhere Ausbeuten erreicht werden. Die höchste Ausbeute wird mit einer Konzentration von 100 % Dioxan erreicht. Ebenfalls sollte die Dosierung des Natriums in möglichst vielen Stufen erfolgen. Durch die Verwendung eines Initiators in einer Menge von 0,07 mol% ist ebenfalls eine Steigerung der Ausbeute möglich, so dass bei korrekter Kombination der Reaktionsparameter eine quantitativ hohe Ausbeute erzielt werden kann.

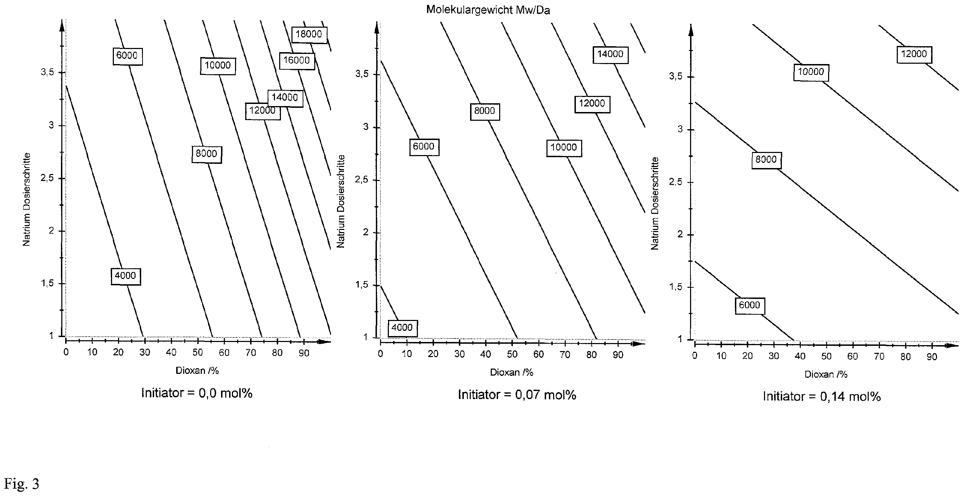

Die Figur 3 zeigt graphisch das Ergebnis einer statistischen Versuchsplanungsanalyse und beschreibt den Einfluss von Dioxan, von einem Initiator und der Stufenanzahl der Natriumdosierung auf das Molekulargewicht des Polysilans in Dalton. Sowohl ein Dioxan als Lösungsmittel, bevorzugt hochkonzentriertes bzw. reines Dioxan, als auch die stufenweise Dosierung des Natriums führen zu einer Steigerung des Molekulargewichts. Das Gewichtsmittel des Molekulargewichts wurde mittels einer Gel-Permeations-Chromatographie gemessen. Die Verwendung eines Initiators kann positiv auf das Molekulargewicht wirken, sollte aber 0,14 mol% nicht überschreiten.

Daher belegen die Figuren 2 und 3 die erfindungsgemäßen Effekte der Erhöhung der Ausbeutung und des Molekulargewichts in Abhängigkeit des Lösungsmittels Dioxan, des Initiators und der stufenweisen Dosierung des Natriums.

Im Folgenden werden ein Vergleichsbeispiel und mehrere Ausführungsbeispiele beschrieben, die die erwähnten Effekte der Erhöhung der Ausbeute und des Molekulargewichts des Polysilans experimentell zeigen.

### Vergleichsbeispiel

Die Herstellung des Vergleichsbeispiels erfolgt nach folgendem Protokoll. Das Lösungsmittelgemisch aus 610 ml Toluol und 102 ml Tetrahydrofuran wird unter Schutzgas in einem 2L- Dreihalskolben vorgelegt, bei Raumtemperatur mit 112,37 g Natrium versetzt und anschließend auf 102 °C erhitzt. Die Siedetemperatur des Gemisches kann über das Verhältnis der Lösungsmittel eingestellt werden. Die Synthese wird während der gesamten Zeit unter Rückfluss (T∼102°C) betrieben. Der verwendete KPG-Rührer wird mit einer Geschwindigkeit von 250 1/min betrieben um eine homogene Natriumsuspension zu erhalten. Die bereitgestellte Mischung aus 57 ml Phenyltrichlorsilan, 76 ml Dichloromethylvinylsilan und 152 ml Dichlordimethylsilan wird innerhalb von 40 Minuten zu der Natriumsuspension getropft. Die errechnete Zutropfgeschwindigkeit lag bei 7,1 ml/min. Nachdem die Monosilanmischung zugeführt wurde, wird die Reaktion 2 Stunden unter Rückfluss gerührt. Nach dem Abkühlen auf Raumtemperatur wurde die erhaltene Suspension unter Schutzgas filtriert (10µm Fritte). Das erhaltene Filtrat wird auf eine Konzentration von 65 Gewichtsprozent Polysilan eingeengt. Die Gesamtausbeute an löslichem Polysilan liegt bei 80 %. Das mittels Gel-Permeations-Chromatographie ermittelte Gewichtsmittel des Molekulargewichts liegt bei 6111 Da.

### Ausführungsbeispiel 1

Die Herstellung erfolgt nach der Standard-Schlenk-Technologie in einer Apparatur dargestellt in Fig. 1. In den Dreihalskolben werden unter Argon 1078ml Dioxan und 15,1 g Natrium vorgelegt. In dem Tropftrichter befindet sich eine Mischung aus 29,3 ml Phenyltrichlorosilan, 40,2 ml Dichloromethylvinylsilan und 74 ml Dichlorodimethylsilan. Das Lösungsmittel wird zum Sieden erhitzt, dabei stellt sich eine Temperatur von 101°C ein. Der Rührer wird auf eine Geschwindigkeit von 250 Umdrehungen pro Minute eingestellt, damit sich eine gleichmäßige Dispersion aus dem Lösungsmittelgemisch und dem geschmolzenen Natrium einstellen kann. Zuerst werden 0,11 g Chlortriphenylsilan (0,035 mol%) zugegeben, dabei ist eine leichte Blaufärbung zu beobachten. Nach einer Minute wird das Gemisch der Chlormonosilane mit einer Zutropfgeschwindigkeit von 5,7 ml/min (mindestens 5,5 ml/min) zugegeben. Das Einsetzen der Reaktion wird durch die Blaufärbung des Ansatzes angezeigt. Nach sechs Minuten wird das Zutropfen unterbrochen und erneut 15,1 g Natrium, gefolgt von 0,11 g Chlortriphenylsilan zugegeben. Anschließend wird wieder ein Viertel der Monosilane mit der angegebenen Rate zugetropft. In diesem Rhythmus wird bis zum vollständigen Verbrauch der Silanmischung verfahren. Die vollständige Zugabe ist nach 25 min erfolgt, während dieser Zeit bleibt die Temperatur konstant bei 101°C. Anschließend wird die Lösung für 2 Stunden unter Rückfluss gekocht. Nach Abkühlen wird die Suspension mit Hilfe einer Schutzgasfritte, die eine Porengröße von 10 µm besitzt, filtriert. Als Rückstand bleibt eine Mischung aus Natriumchlorid, unreagiertem Natrium und ein geringer Teil in dem verwendeten Lösungsmittels unlösliches Polysilan. Der Rückstand wird mit 160 ml iso-Propanol suspendiert und durch stufenweise Zugaben von Methanol wird das Natrium deaktiviert. Im Filtrat ist das Lösungsmittel mit dem darin gelösten Polysilan enthalten. Nach destillativem Entfernen des Lösungsmittels wird das Polysilan als feinpulverige Masse in einer Ausbeute von 85 % erhalten. Das mittels Gel-Permeations-Chromatographie ermittelte Gewichtsmittel des Molekulargewichts des Polysilans liegt bei 14124 Da. Die Viskosität bei 100°C liegt bei 2200 Pa s. Die Messungen erfolgten an einen Rotationsrheometer Physica MCR 301 der Firma Anton Parr. Die Messungen erfolgten mit einer Platte/Platte-Geometrie mit ca. 300-500 mg der jeweiligen Probe.

Die Zusammensetzung des Polysilanprodukts wird mittels Protonen-NMR-Spektroskopie bestimmt. Die Protonen-NMR Spektren wurden mit einem 250MHz Spektrometer der Firma Bruker Biospin GmbH in deuteriertem Dioxan oder Benzol aufgenommen. Die Auswertung erfolgte mit der Software MestReNova LITE Version 5.2.5, als interner Standard wurde das jeweilige Lösungsmittel verwendet.

Der Anteil der Alkylreste beträgt in diesem Beispiel 66,7 %, der Anteil der Alkenylgruppen 12,7 %, der Anteil der Arylgruppen 20,3% und der Anteil der Wasserstoffatome 1 %. Das Verfahren nach Ausführungsbeispiel 1 führt zu einem höheren Molekulargewicht des Polysilans und zu einer höheren Ausbeute als das Vergleichsbeispiel, das den Stand der Technik zeigt.

### Ausführungsbeispiel 2:

Die Reaktionsführung im Ausführungsbeispiel 2 erfolgt nach Ausführungsbeispiel 1, wobei die gesamte Menge an Natrium bereits zu Beginn vorlegelegt wird und kein Initiator zugegeben wird. Die Ausbeute ist mit 98 % deutlich erhöht. Das Molekulargewicht Mw des Polysilans beträgt 11950 Da und ist damit deutlich gegenüber dem Stand der Technik erhöht. Im Vergleich zum Ausführungsbeispiel 1 zeigt sich, dass eine stufenweise Zugabe an Natrium und/oder die Zugabe eines Initiators das Molekulargewicht des Polysilans erhöhen kann.

### Ausführungsbeispiel 3:

Die Reaktionsführung im Ausführungsbeispiel 3 erfolgt nach Ausführungsbeispiel 1, wobei die gesamte Menge an Natrium und die gesamte Menge an Initiator bereits zu Beginn vorgelegt wird. Die Ausbeute ist mit 95 % gegenüber dem Stand der Technik erhöht, ebenso das Molekulargewicht Mw des Polysilans von 11398 Da. Demnach ist es vorteilhaft das Natrium und/oder den Initiator stufenweise hinzuzugeben. Der mittels NMR-Spektroskopie (Durchführung wie in Ausführungsbeispiel 1) bestimmte Anteil der Alkylreste beträgt in diesem Beispiel 68,9 %, der Anteil der Alkenylgruppen 14,3 %, der Anteil der Arylgruppen 16,8% und der Anteil der Wasserstoffatome 1,1 %.

### Ausführungsbeispiel 4: (nicht erfindungsgemäß)

Die Reaktionsführung im Ausführungsbeispiel 4 erfolgt nach Ausführungsbeispiel 1 , wobei kein Initiator zugegeben wird. Die Ausbeute beträgt sehr gute 91 % und auch das Molekulargewicht Mw des Polysilans von 8710 Da ist gegenüber dem Vergleichsbeispiel deutlich erhöht. Das Ausführungsbeispiel 4 zeigt aber im Vergleich zu Ausführungsbeispiel 1, dass die Zugabe eines Initiators das Molekulargewicht Mw des Polysilans stark erhöht. Das Verhältnis von Silicium zu Kohlenstoff beträgt in diesem Ausführungsbeispiel 0,788. Das Verhältnis wird mittels Elementanalyse ermittelt. Dazu wurde der Sauerstoff und Kohlenstoffgehalt der Probe gemessen und der Siliciumanteil aus dem Rest zu 100% berechnet. Zur Messung des Kohlenstoffanteils wurde die Probe in eine Zinkkapsel eingefüllt und in Sauerstoffhaltiger Atmosphäre vollständig oxidiert. Die Reaktionsgase werden gaschromatografisch aufgetrennt und mittels Wärmeleitmessung quantitativ bestimmt. Die Sauerstoffbestimmung erfolgt analog mit Helium als Trägergas, der Sauerstoff der Probe reagiert mit dem verwendeten Graphittiegel und das entstandene CO₂ wird detektiert. Die vorstehenden Analysenverfahren entsprechen dem Prinzip der üblichen Messgeräte für die Elementaranalyse.

### Ausführungsbeispiel 5:

Die Reaktionsführung im Ausführungsbeispiel 5 erfolgt nach Ausführungsbeispiel 1, wobei das Natrium sowie der Initiator in zwei Stufen zugegeben werden. Die Ausbeute beträgt sehr gute 92 %. Auch ist das Gewichtsmittel des Molekulargewichts mit 6832,5 Da gegenüber dem Stand der Technik erhöht. Während das zahlengemittelte Molekulargewicht Mn mit 982 Da gegenüber Ausführungsbeispiel 3 (955 Da) und dem Stand der Technik (844 Da) erhöht ist, ist das gewichtete Molekulargewicht Mw mit 6832,5 Da gegenüber Ausführungsbeispiel 3 erniedrigt, was zeigt, dass die zwar zweistufige Zugabe von Natrium zu einem insgesamt erhöhten Polymerisationsgrad führt, während die Anzahl von Molekülen mit sehr hohem Molekulargewicht gegenüber Ausführungsbeispiel 3 jedoch geringer ist. Der mittels NMR-Spektroskopie (Durchführung wie in Ausführungsbeispiel 1) bestimmte Anteil der Alkylreste beträgt in diesem Beispiel 67,4 %, der Anteil der Alkenylgruppen 14,6 %, der Anteil der Arylgruppen 17,9% und der Anteil der Wasserstoffatome 3,2 %.

### Ausführungsbeispiel 6:

Die Reaktionsführung im Ausführungsbeispiel 5 erfolgt nach Ausführungsbeispiel 1, wobei 50 % des Dioxans durch ein Toluol-Tetrahydrofurangemisch im Verhältnis 6 zu 1 ersetzt wurde. Das erhaltene Molekulargewicht beträgt nur 4900 Da, was den Einfluss des Dioxans zeigt. Dennoch kann die zahlengemittelte Molmasse Mn gegenüber dem Stand der Technik erhöht werden, was zeigt, dass insgesamt ein sehr hohen Polymerisationsgrad erreicht wird, während viele Polysilanmoleküle ein vergleichsweise niedriges Molekulargewicht zeigen. Die Verteilung der Molekulargewichte ist dabei homogener

**Tabelle 1**

| Beispiel | Mn (Da) | Mw(Da) | Mp (Da) | Ausbeute [%] |
|---|---|---|---|---|
| Vergleich | 844 | 6111 | 1285 | 80 |
| 1 | 1100 | 14124 | 3107 | 85 |
| 2 | 1182 | 11950 | 3326 | 98 |
| 3 | 955 | 11389 | 3017 | 95 |
| 4 | 1092 | 8710 | 2377 | 91 |
| 5 | 982 | 6832,5 | 2929 | 92 |
| 6 | 1145 | 4900 | 1843 | 84 |

### Ausführungsbeispiel 7: Verarbeitung durch Schmelzspinnen

Das erfindungsgemäße Polysilan wird als feines Granulat in eine Laborspinnanlage eingefüllt und unter Vakuum auf 100°C erhitzt. Nach Erreichen der Temperatur wird durch Anlegen eines 4 bar Stickstoffdrucks das Polymer durch eine Spinndüse gefördert und mit einer Drehzahl von 100-200 Umdrehungen pro Minute abgezogen. Auf Grund der Verstreckung werden dadurch beispielsweise Fasern mit einem Durchmesser von 37 bis 87 µm erhalten.

### Ausführungsbeispiel 8: Verarbeitung durch Trockenspinnen

Das erfindungsgemäß hergestellte Polysilan wird mittels Trockenspinnverfahren zu Grünfasern verarbeitet. Dazu wird das Polysilan in Toluol, THF oder Dioxan gelöst und mittels einer Pumpe durch die Spinndüse gefördert. Durch eine Verstreckung können beispielsweise Fasern mit einem Durchmesser von 51 µm erhalten werden.

### Ausführungsbeispiel 9: Weiterverarbeitung Härtung

Die erhaltenen Grünfasern werden in einer UV-Kammer für 2 mal 5 min mit 500 W ultraviolettem Licht bestrahlt. Dabei werden die thermoplastischen Fasern in unlösliche, unschmelzbare Fasern umgewandelt.

### Ausführungsbeispiel 10: Pyrolyse

Die gehärteten Fasern werden unter Schutzgasatmosphäre bis 1200°C pyrolysiert. Es entstehen keramische Siliciumcarbid-Fasern von beispielsweise einem Durchmesser von 37 µm.

### Ausführungsbeispiel 11: Matrixpolymer mittels Schmelzinfiltration

Aus dem erfindungsgemäß hergestellten Polymer werden nach dem bekannten Verfahren der Schmelzinfiltration Prepregs hergestellt. Diese werden thermisch gehärtet und unter Schutzgasbedingungen pyrolysiert. Der Faserverbundwerkstoff mit keramischer Matrix hat beispielsweise einen Faseranteil von 73 %.

## Patentansprüche

1. Verfahren zur Herstellung eines Polysilans umfassend den Schritt des Reagierens von (i) wenigstens zwei Silanmonomeren und (ii) wenigstens einem Alkalimetall, wobei die Silanmonomere die folgenden Struktureinheiten enthalten:
- wenigstens eine Arylgruppe,
- wenigstens eine Alkylgruppe,
- wenigstens eine Alkenylgruppe sowie
- wenigstens drei Halogenatome, wobei wenigstens drei der Halogenatome an ein Siliciumatom eines der Silanmonomere gebunden sind, **dadurch gekennzeichnet, dass** der Schritt des Reagierens in einem Ether-haltigen Lösungsmittel stattfindet, wobei der Ether mindestens zwei Sauerstoffatome aufweist,
wobei beim Schritt des Reagierens ein Reaktionsinitiator eingesetzt wird.

2. Verfahren nach Anspruch 1, **dadurch gekennzeichnet, dass** das Lösungsmittel 50 bis 100 % iges, vorzugsweise 80 bis 100 %iges, besonders vorzugsweise 100 % iges Dioxan umfasst.

3. Verfahren nach Anspruch 1 bis 2, **dadurch gekennzeichnet, dass** das Alkalimetall in einem Überschuss von mindestens 10 %, bevorzugt 10 bis 20 %, besonders bevorzugt von 10 % gegenüber der Menge an Halogen in den Edukten eingesetzt wird.

4. Verfahren nach Anspruch 1 bis 3, **dadurch gekennzeichnet, dass** das Alkalimetall stufenweise bevorzugt mindestens 2 Stufen, bevorzugter in 3 Stufen und noch bevorzugter in 4 oder mehr Stufen parallel zur Silanmonomerzugabe der Reaktionsmischung zugegeben wird.

5. Verfahren nach Anspruch 1 bis 4, **dadurch gekennzeichnet, dass** beim Schritt des Reagierens ein Reaktionsinitiator eingesetzt wird, der folgende Struktureinheiten enthält:
- ein Siliciumatom
- mindestens ein an das Silicium gebundenes Halogenatom
- mindestens zwei an das Silicium gebundene sterisch hindernde Gruppen.

6. Verfahren nach Anspruch 1 oder 5, **dadurch gekennzeichnet, dass** 0,01 bis 0,25 mol%, bevorzugter 0,03 bis 0,15 mol%, noch bevorzugter 0,06 bis 0,1 mol% des Initiators zur Alkalimetalldispersion vor der Zugabe der restlichen Silanmonomere hinzugegeben wird.

7. Polysilan, das mit einem Verfahren nach Anspruch 1 bis 6 hergestellt wurde, wobei das Polysilan bei 100°C eine mit einem Rotationsrheometer gemäss der Beschreibung gemessene Viskosität von 1500 bis 3000 Pa·s aufweist.

8. Polysilan, wobei das Polysilan, das Arylgruppen, Alkylgruppen und Alkenylgruppen aufweist, ein Molekulargewicht gemäß DIN55672 von mindestens 5000 Da, bevorzugter von mindestens 7500 Da und noch bevorzugter von mindestens 10000 Da aufweist.

9. Polysilan nach Anspruch 7 oder 8, wobei das Polysilan darauf umgerechnet, dass die Summe der nachstehend genannten Gruppen im Polysilan insgesamt 100% beträgt, 40 bis 95 %, besonders bevorzugt 50 bis 80 % und am meisten bevorzugt 60 bis 70 % Alkylgruppen aufweist, 5 bis 30 %, weiter bevorzugt 10 bis 20 % und besonders bevorzugt 10 bis 15 % Alkenylgruppen aufweist, 10 bis 30 %, besonders bevorzugt 15 bis 25 % und am meisten bevorzugt 15 bis 20 % Arylgruppen aufweist und 0,1 bis 10 %, besonders bevorzugt 0,2 bis 5 % Wasserstoffatome aufweist.

10. Polysilan-Fasern hergestellt durch ein Schmelzspinnverfahren oder ein Trockenspinnverfahren aus einem Polysilan nach Anspruch 7 bis 9, wobei die Polysilan-Fasern einen Durchmesser von 1 bis 100 µm aufweisen.

11. Polysilan-Fasern nach Anspruch 10, **dadurch gekennzeichnet, dass** diese einen Durchmesser von 5 bis 50 µm, besonders bevorzugt von 8 bis 35 µm und ganz besonders bevorzugt von 10 bis 25 µm aufweisen.

12. Siliciumcarbid-Fasern, die dadurch hergestellt wurden, dass Polysilan-Fasern hergestellt nach Anspruch 10 oder 11 pyrolisiert, optional vor der Pyrolyse chemisch oder physikalisch gehärtet, und zu keramischen Fasern verarbeitet worden sind.

13. Ein Faserverbundstoff, **dadurch gekennzeichnet, dass** er eine Siliciumcarbid-Faser nach Anspruch 12 und/oder ein Siliciumcarbid-Matrixmaterial auf Basis des Polysilans nach einem der Ansprüche 7 bis 9 umfasst.

14. Verwendung eines Polysilanproduktes nach Anspruch 7 bis 13 zur Herstellung eines Siliciumcarbid-haltigen Formkörpers oder eines Faserverbundstoffes oder für den Leichtbau, die Elektroindustrie, die Raumfahrt, den Kraftfahrzeugbau und den Flugzeugbau.

## Claims

1. A method for preparing a polysilane, comprising the step of reacting (i) at least two silane monomers and (ii) at least one alkali metal, wherein the silane monomers contain the following structural units:
- at least one aryl group,
- at least one alkyl group,
- at least one alkenyl group and
- at least three halogen atoms, wherein at least three of the halogen atoms are bound to a silicon atom of one of the silane monomers, **characterized in that** the step of reacting takes place in an ether-containing solvent, wherein the ether has at least two oxygen atoms,
wherein a reaction initiator is used in the step of reacting.

2. The method according to Claim 1, **characterized in that** the solvent contains 50 to 100%, preferably 80 to 100%, particularly preferably 100%, dioxane.

3. The method according to Claims 1 to 2, **characterized in that** the alkali metal is used in an excess of at least 10%, preferably 10 to 20%, particularly preferably 10%, relative to the quantity of halogen in the educts.

4. The method according to Claims 1 to 3, **characterized in that** the alkali metal is added to the reaction mixture in stages, preferably in at least 2 stages, more preferably in 3 stages, and even more preferably in 4 or more stages, concurrently with the addition of silane monomer.

5. The method according to Claims 1 to 4, **characterized in that** in the step of reacting, a reaction initiator is used that contains the following structural units:
- a silicon atom
- at least one halogen atom that is bound to the silicon
- at least two sterically hindering groups that are bound to the silicon.

6. The method according to Claim 1 or 5, **characterized in that** 0.01 to 0.25 mol%, preferably 0.03 to 0.15 mol%, more preferably 0.06 to 0.1 mol%, of the initiator is added to the alkali metal dispersion before the remaining silane monomers are added.

7. A polysilane that has been prepared with a method according to Claims 1 to 6, wherein the polysilane has a viscosity of 1500 to 3000 Pa·s at 100°C, measured with a rotational rheometer according to the description.

8. A polysilane, wherein the polysilane having aryl groups, alkyl groups, and alkenyl groups has a molecular weight according to DIN 55672 of at least 5000 Da, more preferably at least 7500 Da, and even more preferably at least 10,000 Da.

9. The polysilane according to Claim 7 or 8, wherein the polysilane is converted such that the sum of the groups stated below in the polysilane is 100% in total, contains 40 to 95%, particularly preferably 50 to 80%, and most preferably 60 to 70%, alkyl groups, contains 5 to 30%, more preferably 10 to 20%, and particularly preferably 10 to 15%, alkenyl groups, contains 10 to 30%, particularly preferably 15 to 25%, and most preferably 15 to 20% aryl groups, and contains 0.1 to 10%, particularly preferably 0.2 to 5%, hydrogen atoms.

10. Polysilane fibers that are manufactured by a melt spinning process or a dry spinning process from a polysilane according to Claims 7 to 9, wherein the polysilane fibers have a diameter of 1 to 100 µm.

11. Polysilane fibers according to Claim 10, **characterized in that** they have a diameter of 5 to 50 um, particularly preferably 8 to 35 µm, and very particularly preferably 10 to 25 µm.

12. Silicon carbide fibers that have been manufactured by pyrolyzing polysilane fibers manufactured according to Claim 10 or 11, optionally chemically or physically hardened before the pyrolysis, and processed to form ceramic fibers.

13. A fiber composite, **characterized in that** it contains a silicon carbide fiber according to Claim 12 and/or a silicon carbide matrix material based on the polysilane according to one of Claims 7 to 9.

14. Use of a polysilane product according to Claims 7 to 13 for manufacturing a silicon carbide-containing molded body or a fiber composite or for lightweight construction, the electronics industry, aerospace, automotive manufacturing, and aircraft manufacturing.

## Revendications

1. Procédé de production d'un polysilane, ledit procédé comprenant l'étape de réaction (i) d'au moins deux monomères de silane et (ii) d'au moins un métal alcalin, les monomères de silane contenant les unités structurales suivantes :
- au moins un groupe aryle,
- au moins un groupe alkyle,
- au moins un groupe alcényle et
- au moins trois atomes d'halogène, au moins trois des atomes d'halogène étant liés à un atome de silicium de l'un des monomères silanes, **caractérisé en ce que** l'étape de réaction a lieu dans un solvant contenant de l'éther, l'éther comportant au moins deux atomes d'oxygène,
un initiateur de réaction étant utilisé dans l'étape de réaction.

2. Procédé selon la revendication 1, **caractérisé en ce que** le solvant contient 50 à 100 %, de préférence 80 à 100 %, de manière particulièrement préférée 100 %, de dioxane.

3. Procédé selon les revendications 1 à 2, **caractérisé en ce que** le métal alcalin est utilisé en excès d'au moins 10 %, de préférence de 10 à 20 %, de manière particulièrement préférée de 10 %, par rapport à la quantité d'halogène dans les éduits.

4. Procédé selon les revendications 1 à 3, **caractérisé en ce que** le métal alcalin est ajouté au mélange réactionnel par étapes, de préférence en au moins 2 étapes, plus préférablement en 3 étapes, et encore plus préférablement en 4 étapes ou plus, parallèlement à l'addition de monomère silane.

5. Procédé selon les revendications 1 à 4, **caractérisé en ce que**, dans l'étape de réaction, on utilise un initiateur de réaction qui contient les unités structurales suivantes :
- un atome de silicium
- au moins un atome d'halogène lié au silicium
- au moins deux groupes d'empêchement stérique liés au silicium.

6. Procédé selon la revendication 1 ou 5, **caractérisé en ce que** 0,01 à 0,25 % molaire, plus préférablement 0,03 à 0,15 % molaire, encore plus préférablement 0,06 à 0,1 % molaire, de l'initiateur est ajouté à la dispersion de métal alcalin avant les monomères silane restants.

7. Polysilane qui a été produit avec un procédé selon les revendications 1 à 6, le polysilane ayant une viscosité de 1500 à 3000 Pa·s à 100 °C, mesurée avec un rhéomètre rotatif selon la description.

8. Polysilane, le polysilane comportant des groupes aryle, des groupes alkyle et des groupes alcényle et ayant un poids moléculaire selon DIN 55672 d'au moins 5000 Da, plus préférablement d'au moins 7500 Da, et encore plus préférablement d'au moins 10000 Da.

9. Polysilane selon la revendication 7 ou 8, le polysilane étant converti de telle sorte que la somme des groupes susmentionné dans le polysilane soit de 100 % au total, et contienne 40 à 95 %, de manière particulièrement préférée 50 à 80 %, et tout particulièrement 60 à 70 %, de groupes alkyles, 5 à 30 %, plus préférablement 10 à 20 %, et de manière particulièrement préférée 10 à 15 %, de groupes alcényles, 10 à 30 %, de manière particulièrement préférée 15 à 25 %, et tout particulièrement 15 à 20 % de groupes aryle, et 0,1 à 10 %, de manière particulièrement préférée 0,2 à 5 %, d'atomes d'hydrogène.

10. Fibres de polysilane produites par un procédé de filage à l'état fondu ou un procédé de filage à sec à partir d'un polysilane selon les revendications 7 à 9, les fibres de polysilane ayant un diamètre de 1 à 100 µm.

11. Fibres de polysilane selon la revendication 10, **caractérisées en ce qu'**elles ont un diamètre de 5 à 50 µm, de manière particulièrement préférée de 8 à 35 µm, et de manière tout particulièrement préférée de 10 à 25 µm.

12. Fibres de carbure de silicium produites par pyrolyse de fibres de polysilane produites selon la revendication 10 ou 11, éventuellement durcies chimiquement ou physiquement avant la pyrolyse, et traitées pour former des fibres céramiques.

13. Composite de fibres, **caractérisé en ce qu'**il contient une fibre de carbure de silicium selon la revendication 12 et/ou un matériau matriciel de carbure de silicium à base de polysilane selon l'une des revendications 7 à 9.

14. Utilisation d'un produit polysilane selon les revendications 7 à 13 pour la fabrication d'un corps moulé contenant du carbure de silicium ou d'un composite de fibres ou pour la construction légère, l'industrie électronique, l'espace, la construction automobile et la construction aéronautique.
